# EUROPEAN PATENT APPLICATION

(11) **EP 3 388 159 A1**
(43) Date of publication of application: **17.10.2018**
(21) Application number: 16883695.5
(22) Date of filing: 17.11.2016
(51) Int. Cl.: B21B 1/08, B21B 1/088, B21B 27/02

(54) **METHOD FOR PRODUCING STEEL H-BEAM, AND STEEL H-BEAM PRODUCT**

(30) Priority: 07.01.2016 JP 2016002072
(71) Applicant: Nippon Steel & Sumitomo Metal Corporation, Tokyo 100-8071 (JP)
(72) Inventor: YAMASHITA, Hiroshi, Tokyo 100-8071 (JP)
(74) Representative: Vossius & Partner Patentanwälte Rechtsanwälte mbB
(86) International application number: PCT/JP2016/084067
(87) International publication number: WO 2017/119195

(57) **Abstract**

To efficiently and stably produce an H-shaped steel product with a flange width larger than a conventional flange width and prevent a shape defect from occurring in shaping using a flat shaping caliber at a rough rolling step. A rolling mill that performs the rough rolling step is engraved with a plurality of calibers configured to shape a material to be rolled, the number of the plurality of calibers being five or more; shaping in one or a plurality of passes is performed on the material to be rolled in the plurality of calibers; a first caliber and a second caliber of the plurality of calibers are formed with projections configured to create splits vertically with respect to a width direction of the material to be rolled; in the second caliber and subsequent calibers of the plurality of calibers, reduction is performed in a state where end surfaces of the material to be rolled are in contact with peripheral surfaces of the calibers in shaping in at least one pass or more; in a third caliber and subsequent calibers excluding a final caliber of the plurality of calibers, a step of sequentially bending divided parts formed by the splits is performed; and the final caliber of the plurality of calibers is a flat shaping caliber, and rolling and shaping in the flat shaping caliber is performed under a rolling condition that a pulldown rate is 1.0 or less.

## Description

### [Technical Field]

### (Cross-reference to related applications)

This application is based upon and claims the benefit of priority of the prior Japanese Patent Application No. 2016-002072, filed in Japan on January 7, 2016, the entire contents of which are incorporated herein by reference.

The present invention relates to a method for producing H-shaped steel using a slab or the like having, for example, a rectangular cross section as a material, and an H-shaped steel product.

### [Background Art]

In the case of producing H-shaped steel, a material such as a slab or a bloom extracted from a heating furnace is shaped into a raw blank (a material to be rolled in a so-called dog-bone shape) by a rough rolling mill (BD). Thicknesses of a web and flanges of the raw blank are subjected to reduction by an intermediate universal rolling mill, and flanges of a material to be rolled are subjected to width reduction and forging and shaping of end surfaces by an edger rolling mill close to the intermediate universal rolling mill. Then, an H-shaped steel product is shaped by a finishing universal rolling mill.

In such a method for producing H-shaped steel, various techniques have been devised as a method of shaping the raw blank in the so-called dog-bone shape from the slab material having a rectangular cross section. For example, Patent Document 1 discloses a technique in which a groove is created at a material end portion of the material having a rectangular cross section, using a wedging projection formed on a roll collar part between box calibers to obtain a large-size raw steel billet (a material in a dog-bone shape) using both the box caliber and the wedging projection. Besides, Patent Document 2 discloses a technique in which splits are created on slab end surfaces in a first caliber at a rough rolling step, the splits are then widened or made deeper and edging rolling is performed in second and subsequent calibers, and the splits on the slab end surfaces are erased in subsequent calibers.

### [Disclosure of the Invention]

### [Problems to Be Solved by the Invention]

[Patent Document 1] Japanese Laid-open Patent Publication No. S60-21101
[Patent Document 2] Japanese Laid-open Patent Publication No. H7-88501

In recent years, with an increase in size of structures and the like, production of large-size H-shaped steel products is desired. In particular, a product having flanges, which greatly contribute to strength and rigidity of H-shaped steel, wider than conventional flanges is desired. To produce the H-shaped steel product with widened flanges, it is necessary to shape a material to be rolled with a flange width larger than a conventional flange width from the shaping at the rough rolling step.

However, in the technique disclosed in Patent Document 1, flange corresponding portions are shaped by edging rolling by the box caliber with a bottom surface in a flat shape, immediately on a material such as a slab provided with splits through no transition of split shapes or the like. Such a method tends to cause shape defects accompanying a rapid change in shape of a material to be rolled. In particular, the change in shape of the material to be rolled in such shaping is decided depending on the relation between the force of a contact portion between the material to be rolled and a roll, and, the flexural rigidity of the material to be rolled, and brings about a problem of being more likely to cause shape defects in the case of producing H-shaped steel with a flange width larger than a conventional flange width.

Besides, in the technique disclosed, for example, in Patent Document 2, there is a limit in widening of flanges in the method in which splits are created on end surfaces of a material such as a slab (slab end surfaces) and the end surfaces are subjected to edging, and the spread is utilized for rough rolling. In other words, in order to widen flanges in conventional rough rolling methods, techniques such as wedge designing (designing of a split angle), reduction adjustment, and lubrication adjustment are used to improve the spread. However, it is known that since none of the methods greatly contributes to a flange width, the rate of spread, which represents the rate of a spread amount of the flange width to an edging amount, is approximately 0.8 even under a condition that the efficiency at the initial stage of edging is the highest, decreases as the spread amount of the flange width increases under a condition that edging is repeated in the same caliber, and finally becomes approximately 0.5. It is also conceivable to increase the size of the material such as a slab itself to increase the edging amount, but there are circumstances where sufficient widening of product flanges is not realized because there are device limits in facility scale and reduction amount of a rough rolling mill.

Besides, in producing the H-shaped steel product with a flange width widened, there is a concern about problems such as a shape defect and the like which have not been in the prior art, at the rough rolling step and the rolling step subsequent thereto because a material to be rolled with a flange width larger than a conventional flange width from shaping at the rough rolling step, and therefore realization of a method of solving the problems is desired.

In view of such circumstances, an object of the present invention is to provide a method for producing H-shaped steel, which suppresses occurrence of shape defects in a material to be rolled by, at a rough rolling step using calibers in producing H-shaped steel, creating deep splits on end surfaces of a material such as a slab using projections in acute-angle tip shapes, and sequentially bending flange portions formed by the splits, to efficiently and stably produce an H-shaped steel product with a flange width larger than a conventional flange width, and prevents a shape defect from occurring in shaping using a flat shaping caliber at the rough rolling step.

### [Means for Solving the Problems]

To achieve the above object, according to the present invention, there is provided a method for producing H-shaped steel, the method including: a rough rolling step; an intermediate rolling step; and a finish rolling step, wherein: a rolling mill that performs the rough rolling step is engraved with a plurality of calibers configured to shape a material to be rolled, the number of the plurality of calibers being five or more; shaping in one or a plurality of passes is performed on the material to be rolled in the plurality of calibers; a first caliber and a second caliber of the plurality of calibers are formed with projections configured to create splits vertically with respect to a width direction of the material to be rolled; in the second caliber and subsequent calibers of the plurality of calibers, reduction is performed in a state where end surfaces of the material to be rolled are in contact with peripheral surfaces of the calibers in shaping in at least one pass or more; in a third caliber and subsequent calibers excluding a final caliber of the plurality of calibers, a step of sequentially bending divided parts formed by the splits is performed; and the final caliber of the plurality of calibers is a flat shaping caliber, and rolling and shaping in the flat shaping caliber is performed under a rolling condition that a pulldown rate is 1.0 or less.

Note that the pulldown rate represents "the flange width decrease amount/the web thickness decrease amount" of the material to be rolled A in the flat shaping caliber.

In production of H-shaped steel having dimensions of 1500 mm × 600 mm, the rolling and shaping in the flat shaping caliber may be performed under a rolling condition that a web thickness of the material to be rolled after rolling and shaping becomes 160 mm or more.

Further, according to the present invention, there is provided an H-shaped steel product produced by the above method of producing the H-shaped steel, wherein a flange width is more than 400 mm.

### [Effect of the Invention]

According to the present invention, a technique of producing H-shaped steel is realized which suppresses occurrence of shape defects in a material to be rolled by, at a rough rolling step using calibers in producing H-shaped steel, creating deep splits on end surfaces of a material such as a slab using projections in acute-angle tip shapes, and sequentially bending flange portions formed by the splits, to efficiently and stably produce an H-shaped steel product with a flange width larger than a conventional flange width, and prevents a shape defect from occurring in shaping using a flat shaping caliber at the rough rolling step.

### [Brief Description of the Drawings]

[FIG. 1] FIG. 1 is a schematic explanatory view about a production line for H-shaped steel.
[FIG. 2] FIG. 2 is a schematic explanatory view of a first caliber.
[FIG. 3] FIG. 3 is a schematic explanatory view of a second caliber.
[FIG. 4] FIG. 4 is a schematic explanatory view of a third caliber.
[FIG. 5] FIG. 5 is a schematic explanatory view of a fourth caliber.
[FIG. 6] FIG. 6 is a schematic explanatory view of a fifth caliber (flat shaping caliber).
[FIG. 7] FIG. 7 is a schematic explanatory view in a case of executing rolling and shaping under a conventional rolling condition using a flat shaping caliber having a conventionally known configuration and shape on a material to be rolled after shaped in the fourth caliber.
[FIG. 8] FIG. 8 is a graph illustrating a relation between a flange width and a web thickness of the material to be rolled and a relation between a web thickness and a pulldown rate when the rolling proceeds in the fifth caliber.

### [Best Mode for Carrying out the Invention]

Hereinafter, an embodiment of the present invention will be explained referring to the drawings. Note that in this description and the drawings, components having substantially the same functional configurations are denoted by the same numerals to omit duplicated explanation.

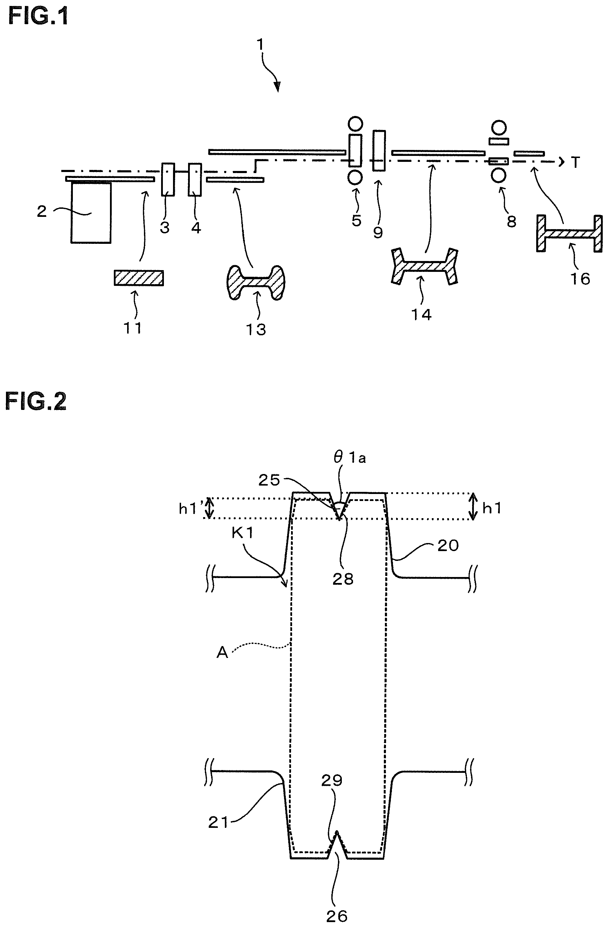

FIG. 1 is an explanatory view about a production line T for H-shaped steel including a rolling facility 1 according to this embodiment. As illustrated in FIG. 1, in the production line T, a heating furnace 2, a sizing mill 3, a rough rolling mill 4, an intermediate universal rolling mill 5, and a finishing universal rolling mill 8 are arranged in order from the upstream side. Further, an edger rolling mill 9 is provided close to the intermediate universal rolling mill 5. Note that a steel material in the production line T is sometimes collectively described as a "material to be rolled A" for explanation and its shape is sometimes illustrated using broken lines, oblique lines and the like in the drawings.

As illustrated in FIG. 1, in the production line T, a material to be rolled A such as a slab 11 or the like extracted from the heating furnace 2 is subjected to rough rolling in the sizing mill 3 and the rough rolling mill 4. Then, the material to be rolled A is subjected to intermediate rolling in the intermediate universal rolling mill 5. During the intermediate rolling, reduction is performed on end portions or the like (later-described flange portions 80) of the material to be rolled by the edger rolling mill 9 as necessary. In a normal case, about four to six calibers in total are engraved on rolls of the sizing mill 3 and the rough rolling mill 4, and an H-shaped raw blank 13 is shaped by reverse rolling in about a dozen passes through those calibers, and the H-shaped raw blank 13 is subjected to application of reduction in a plurality of passes using a rolling mill train composed of two rolling mills such as the intermediate universal rolling mill 5 and the edger rolling mill 9, whereby an intermediate material 14 is shaped. The intermediate material 14 is subjected to finish rolling into a product shape in the finishing universal rolling mill 8, whereby an H-shaped steel product 16 is produced.

Next, caliber configurations and caliber shapes engraved on the sizing mill 3 and the rough rolling mill 4 illustrated in FIG. 1 will be explained below referring to the drawings. FIG. 2 to FIG. 6 are schematic explanatory views about calibers engraved on the sizing mill 3 and the rough rolling mill 4 which perform a rough rolling step. All of the first caliber to the fourth caliber explained here may be engraved, for example, on the sizing mill 3, or five calibers such as the first caliber to a fifth caliber may be engraved separately on the sizing mill 3 and the rough rolling mill 4. In other words, the first caliber to the fourth caliber may be engraved across both the sizing mill 3 and the rough rolling mill 4, or may be engraved on one of the rolling mills. In the rough rolling step in production of standard H-shaped steel, shaping in one or a plurality of passes is performed in each of the calibers.

Besides, a case where there are five calibers to be engraved will be described as an example in this embodiment, and the number of the calibers does not always need to be five calibers, but the number of the calibers may be plural such as five or more. In short, the caliber configuration only needs to be suitable for shaping the H-shaped raw blank 13. Note that in FIG. 2 to FIG. 6, a schematic final pass shape of the material to be rolled A in shaping in each caliber is illustrated by broken lines.

FIG. 2 is a schematic explanatory view of a first caliber K1. The first caliber K1 is engraved on an upper caliber roll 20 and a lower caliber roll 21 which are a pair of horizontal rolls, and the material to be rolled A is subjected to reduction and shaping in a roll gap between the upper caliber roll 20 and the lower caliber roll 21. Further, a peripheral surface of the upper caliber roll 20 (namely, an upper surface of the first caliber K1) is formed with a projection 25 protruding toward the inside of the caliber. Further, a peripheral surface of the lower caliber roll 21 (namely, a bottom surface of the first caliber K1) is formed with a projection 26 protruding toward the inside of the caliber. These projections 25, 26 have tapered shapes, and dimensions such as a protrusion length of the projection 25 and the projection 26 are configured to be equal to each other. A height (protrusion length) of the projections 25, 26 is h1 and a tip portion angle thereof is *θ* 1a.

In the first caliber K1, the projections 25, 26 are pressed against upper and lower end portions (slab end surfaces) of the material to be rolled A and thereby form splits 28, 29. Here, a tip portion angle (also called a wedge angle) *θ* 1a of the projections 25, 26 is desirably, for example, 25° or more and 40° or less.

Here, a caliber width of the first caliber K1 is preferably substantially equal to the thickness of the material to be rolled A (namely, a slab thickness). Specifically, when the width of the caliber at the tip portions of the projections 25, 26 formed in the first caliber K1 is set to be the same as the slab thickness, a right-left centering property of the material to be rolled A is suitably secured. Further, it is preferable that such a configuration of the caliber dimension brings the projections 25, 26 and part of caliber side surfaces (side walls) into contact with the material to be rolled A at upper and lower end portions (slab end surfaces) of the material to be rolled A during shaping in the first caliber K1 as illustrated in FIG. 2 so as to prevent active reduction at the upper surface and the bottom surface of the first caliber K1 from being performed on the slab upper and lower end portions divided into four elements (parts) by the splits 28, 29. This is because the reduction by the upper surface and the bottom surface of the caliber causes elongation of the material to be rolled A in the longitudinal direction to decrease the generation efficiency of the flanges (later-described flange portions 80). In other words, in the first caliber K1, a reduction amount at the projections 25, 26 (reduction amount at wedge tips) at the time when the projections 25, 26 are pressed against the upper and lower end portions (slab end surfaces) of the material to be rolled A to form the splits 28, 29 is made sufficiently larger than a reduction amount at the slab upper and lower end portions (reduction amount at slab end surfaces) and thereby forms the splits 28, 29.

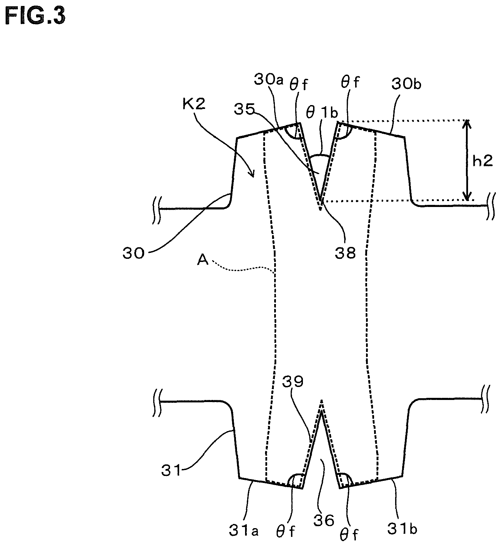

FIG. 3 is a schematic explanatory view of a second caliber K2. The second caliber K2 is engraved on an upper caliber roll 30 and a lower caliber roll 31 which are a pair of horizontal rolls. A peripheral surface of the upper caliber roll 30 (namely, an upper surface of the second caliber K2) is formed with a projection 35 protruding toward the inside of the caliber. Further, a peripheral surface of the lower caliber roll 31 (namely, a bottom surface of the second caliber K2) is formed with a projection 36 protruding toward the inside of the caliber. These projections 35, 36 have tapered shapes, and dimensions such as a protrusion length of the projection 35 and the projection 36 are configured to be equal to each other. A tip portion angle of the projections 35, 36 is desirably a wedge angle *θ* 1b of 25° or more and 40° or less.

Note that the wedge angle *θ* 1a of the first caliber K1 is preferably the same angle as the wedge angle *θ* 1b of the second caliber K2 at a subsequent stage in order to ensure the thickness of the tip end portions of the flange corresponding portions, enhance inductive property, and secure stability of tolling.

A height (protrusion length) h2 of the projections 35, 36 is configured to be larger than the height h1 of the projections 25, 26 of the first caliber K1 so as to be h2 > h1. Further, the tip portion angle of the projections 35, 36 is preferably the same as the tip portion angle of the projections 25, 26 in the first caliber K1 in terms of rolling dimension accuracy. In a roll gap between the upper caliber roll 30 and the lower caliber roll 31, the material to be rolled A after passing through the first caliber K1 is further shaped.

Here, the height h2 of the projections 35, 36 formed in the second caliber K2 is larger than the height h1 of the projections 25, 26 formed in the first caliber K1, and an intrusion length into the upper and lower end portions of the material to be rolled A is also similarly larger in the second caliber K2. An intrusion depth into the material to be rolled A of the projections 35, 36 in the second caliber K2 is the same as the height h2 of the projections 35, 36. In other words, an intrusion depth h1' into the material to be rolled A of the projections 25, 26 in the first caliber K1 and the intrusion depth h2 into the material to be rolled A of the projections 35, 36 in the second caliber K2 satisfy a relation of h1' < h2.

Further, angles *θ* f formed between caliber upper surfaces 30a, 30b and caliber bottom surfaces 31a, 31b facing the upper and lower end portions (slab end surfaces) of the material to be rolled A, and, inclined surfaces of the projections 35, 36, are configured to be about 90° (almost right angle) at all of four locations illustrated in FIG. 3.

Since the intrusion length of the projections at the time when pressed against the upper and lower end portions (slab end surfaces) of the material to be rolled A is large as illustrated in FIG. 3, shaping is performed to make the splits 28, 29 formed in the first caliber K1 deeper in the second caliber K2 to thereby form the splits 38, 39. Note that based on the dimensions of the splits 38, 39 formed here, a flange half-width at the end of a flange shaping step in the rough rolling step is decided.

Further, the shaping in the second caliber K2 is performed by multi-pass, and in the multi-pass shaping, shaping is performed to bring the upper and lower end portions (slab end surfaces) of the material to be rolled A into contact with the caliber upper surfaces 30a, 30b and the caliber bottom surfaces 31a, 31b facing them in a final pass. This is because if the upper and lower end portions of the material to be rolled A are made to be out of contact with the inside of the caliber in all passes in the second caliber K2, a shape defect such as flange corresponding portions (parts corresponding to the later-described flange portions 80) being shaped to be laterally asymmetrical possibly occurs, bringing about a problem in terms of a material passing property.

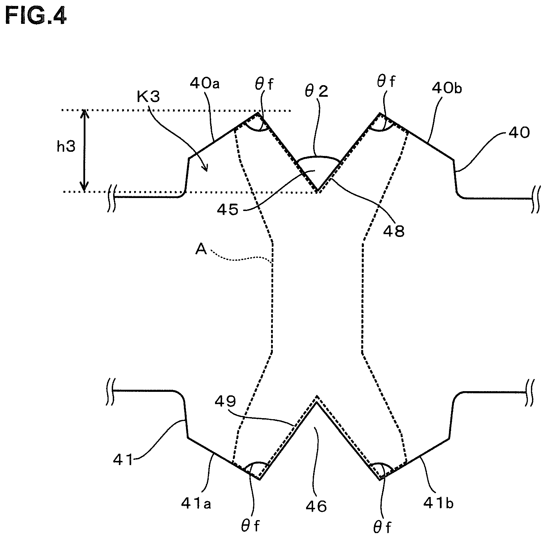

FIG. 4 is a schematic explanatory view of a third caliber K3. The third caliber K3 is engraved on an upper caliber roll 40 and a lower caliber roll 41 which are a pair of horizontal rolls. A peripheral surface of the upper caliber roll 40 (namely, an upper surface of the third caliber K3) is formed with a projection 45 protruding toward the inside of the caliber. Further, a peripheral surface of the lower caliber roll 41 (namely, a bottom surface of the third caliber K3) is formed with a projection 46 protruding toward the inside of the caliber. These projections 45, 46 have tapered shapes, and dimensions such as a protrusion length of the projection 45 and the projection 46 are configured to be equal to each other.

A tip portion angle *θ* 2 of the projections 45, 46 is configured to be larger than the aforementioned angle *θ* 1b, and an intrusion depth h3 into the material to be rolled A of the projections 45, 46 is smaller than the intrusion depth h2 of the above projections 35, 36 (namely, h3 < h2).

Further, angles *θ* f formed between caliber upper surfaces 40a, 40b and caliber bottom surfaces 41a, 41b facing the upper and lower end portions (slab end surfaces) of the material to be rolled A, and, inclined surfaces of the projections 45, 46, are configured to be about 90° (almost right angle) at all of four locations illustrated in FIG. 4.

As illustrated in FIG. 4, in the third caliber K3, the splits 38, 39 formed in the second caliber K2 at the upper and lower end portions (slab end surfaces) of the material to be rolled A after passe through the third caliber K2 are pressed against the projections 45, 46 and thereby become splits 48, 49. Specifically, in a final pass in shaping in the third caliber K3, a deepest portion angle (hereinafter, also called a split angle) of the splits 48, 49 becomes *θ* 2. In other words, shaping is performed so that divided parts (the parts corresponding to the later-described flange portions 80) shaped along with the formation of the splits 38, 39 in the second caliber K2 are bent outward.

Besides, the shaping in the third caliber K3 illustrated in FIG. 4 is performed by at least one pass or more, and the at least one pass or more are performed with the upper and lower end portions (slab end surfaces) of the material to be rolled A in contact with the inside of the caliber (upper surface and the bottom surface of the third caliber K3). In the state where the upper and lower end portions (slab end surfaces) of the material to be rolled A are in contact with the inside of the caliber, it is preferable to perform light reduction on the end portions.

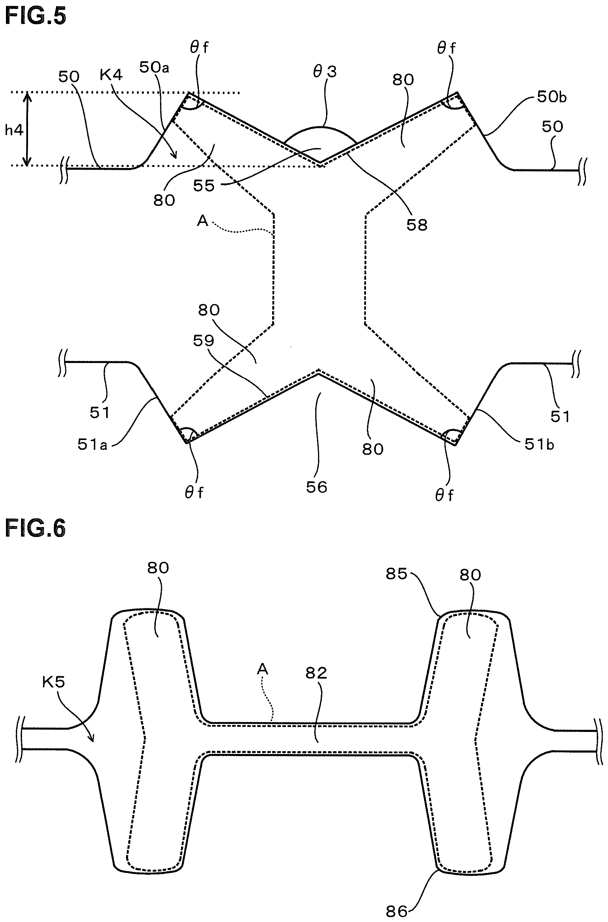

FIG. 5 is a schematic explanatory view of a fourth caliber K4. The fourth caliber K4 is engraved on an upper caliber roll 50 and a lower caliber roll 51 which are a pair of horizontal rolls. A peripheral surface of the upper caliber roll 50 (namely, an upper surface of the fourth caliber K4) is formed with a projection 55 protruding toward the inside of the caliber. Further, a peripheral surface of the lower caliber roll 51 (namely, a bottom surface of the fourth caliber K4) is formed with a projection 56 protruding toward the inside of the caliber. These projections 55, 56 have tapered shapes, and dimensions such as a protrusion length of the projection 55 and the projection 56 are configured to be equal to each other.

A tip portion angle *θ* 3 of the projections 55, 56 is configured to be larger than the aforementioned angle *θ* 2, and an intrusion depth h4 into the material to be rolled A of the projections 55, 56 is smaller than the intrusion depth h3 of the projections 45, 46 (namely, h4 < h3).

Further, angles *θ* f formed between caliber upper surfaces 50a, 50b and caliber bottom surfaces 51a, 51b facing the upper and lower end portions (slab end surfaces) of the material to be rolled A, and, inclined surfaces of the projections 55, 56, are configured to be about 90° (almost right angle) at all of four locations illustrated in FIG. 5 similarly to the above third caliber K3.

In the fourth caliber K4, the splits 48, 49 formed in the third caliber K3 at the upper and lower end portions (slab end surfaces) of the material to be rolled A after passe through the third caliber K3 are pressed against the projections 55, 56 and thereby become splits 58, 59. Specifically, in a final pass in shaping in the fourth caliber K4, a deepest portion angle (hereinafter, also called a split angle) of the splits 58, 59 becomes *θ* 3. In other words, shaping is performed so that divided parts (the parts corresponding to the later-described flange portions 80) shaped along with the formation of the splits 48, 49 in the third caliber K3 are further bent outward. The parts of the upper and lower end portions of the material to be rolled A shaped in this manner are parts corresponding to flanges of a later-described H-shaped steel product and called the flange portions 80 here.

The shaping in the fourth caliber K4 illustrated in FIG. 5 is performed by at least one pass or more, and at least one pass or more of them are performed with the upper and lower end portions (slab end surfaces) of the material to be rolled A in contact with the inside of the caliber (upper surface and the bottom surface of the fourth caliber K4). In the state where the upper and lower end portions (slab end surfaces) of the material to be rolled A are in contact with the inside of the caliber, it is preferable to perform light reduction on the end portions.

FIG. 6 is a schematic explanatory view of a fifth caliber K5. The fifth caliber K5 is composed of an upper caliber roll 85 and a lower caliber roll 86 which are a pair of horizontal rolls. As illustrated in FIG. 6, in the fifth caliber K5, the material to be rolled A shaped until the fourth caliber K4 is rotated 90° or 270° , whereby the flange portions 80 located at the upper and lower ends of the material to be rolled A until the fourth caliber K4 are located on a rolling pith line. Then, in the fifth caliber K5, reduction of the web portion 82 being a connecting part connecting the flange portions 80 at two positions and reduction of the flange tip portions of the flange portions 80 to thereby perform dimension adjustment of the flange width. Thus, an H-shaped steel blank in a so-called dog-bone shape (the H-shaped steel blank 13 illustrated in FIG. 1) is shaped. Note that the fifth caliber K5 thins the web portion 82 by reduction, and is therefore called also a web thinning caliber or a flat shaping caliber.

The H-shaped raw blank 13 thus shape is subjected to reverse rolling in a plurality of passes using the rolling mill train composed of two rolling mills such as the intermediate universal rolling mill 5 and the edger rolling mill 9 which are already-known rolling mills, whereby an intermediate material 14 is shaped. The intermediate material 14 is subjected to finish rolling into a product shape in the finishing universal rolling mill 8, whereby an H-shaped steel product 16 is produced (See FIG. 1).

The first caliber K1 to the fourth caliber K4 according to this embodiment are used to create splits in the upper and lower end portions (slab end surfaces) of the material to be rolled A and perform processing of bending to right and left the portions separated to right and left by the splits to perform the shaping of forming the flange portions 80 as explained above, thereby enabling shaping of the H-shaped raw blank 13 without performing substantial vertical reduction on the upper and lower end surfaces of the material to be rolled A (slab). In short, it becomes possible to shape the H-shaped raw blank 13 with the flange width made wider as compared with the rough rolling method of reducing at all times the slab end surfaces conventionally performed, resulting in production of a final product (H-shaped steel) having a large flange width.

Here, in the method for producing H-shaped steel according to this embodiment, the shape of the flange portion 80 of the material to be rolled A shaped by the aforementioned first caliber K1 to fourth caliber K4 is a shape closer to the shape of the product flange as compared with the shape of the flange portion before the shaping in a flat caliber in the conventional production method. This results from employment of a technique of performing the processing of bending the split parts (the flange portions 80) shaped by creating splits without changing the end portion shapes of the material (slab) having the rectangular cross section used as the material. Further, to employ such a shaping technique, the second caliber K2 to fourth caliber K4 are configured so that the angles *θ* f formed between the caliber upper surfaces at two positions and the caliber bottom surfaces at two positions opposed to the upper and lower end portions (slab end surfaces) of the material to be rolled A, and, the inclined surfaces of the projections formed on the caliber are about are configured to be about 90° (almost right angle), and the upper and lower end portions of the material to be rolled A are each shaped in two divided parts by forming the split therein, so that the thickness of the tip end portions of the flange portions 80 are larger than those by the conventional method.

According to the verification by the present inventors, it has been found that in the case where the reduction of the web portion 82 and the reduction of the tip portions of the flange portions 80 in the flat shaping caliber explained above as the fifth caliber K5 are performed under the same conditions as those of the conventional production method, there is a problem caused from the difference in shape of the flange portions.

Hence, the present inventors have examined the problem in the rolling conditions in the conventional flat shaping caliber, and have earnestly investigated suitable rolling conditions for the material to be rolled A shaped in the first caliber K1 to the fourth caliber K4 in the production method according to this embodiment. Hereinafter, this investigation will be explained referring to the drawings.

The problem in the case of using the conventionally known flat shaping caliber under the conventional rolling conditions after shaping in the fourth caliber K4 in the shaping method using the first caliber K1 to the fourth caliber K4 according to this embodiment will be explained first.

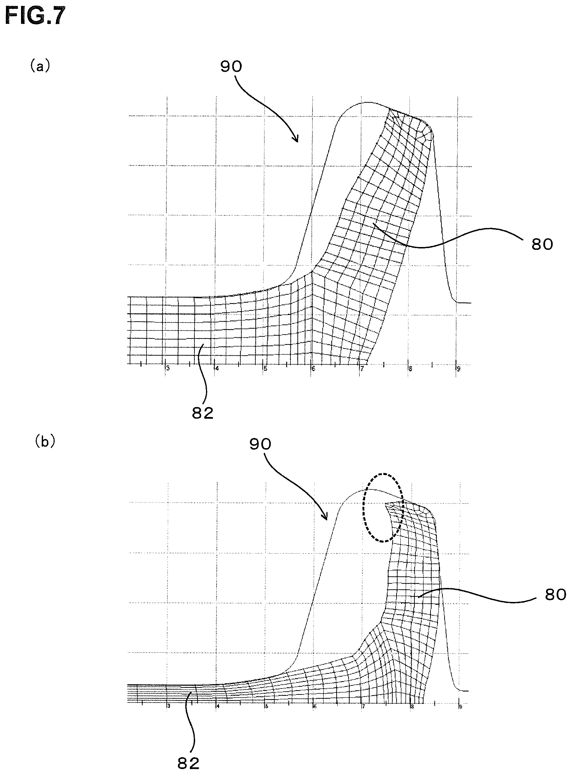

FIG. 7 is an explanatory view in the case of executing shaping including reduction of the thickness of the web portion 82 using a flat shaping caliber 90 (corresponding to the above fifth caliber K5) having the conventionally known configuration and shape on the material to be rolled A after shaped in the fourth caliber K4, (a) illustrates a state before the shaping and (b) illustrates a state after the shaping. Note that in FIG. 7, the material to be rolled A is illustrated with a part thereof enlarged to enlarge the flange portion 80 for illustrating the appearance of the change in shape of the flange portion 80.

As illustrated in FIG. 7(a), at the flange portions 80 shaped by the first caliber K1 to the fourth caliber K4 according to this embodiment, when the web portion 82 is subjected to reduction, its metal flow goes to the outside of the flat shaping caliber 90 (namely, the flange portions 80), so that the steel material is pressed against the side walls of the flat shaping caliber 90. This causes pulldown of the flange portions 80 (flange shrinkage due to web thinning) in the process of thinning the web portion 82. In particular, in large-size H-shaped steel, the width of the web portion 82 is large relative to the flange portions 80, and therefore the pulldown is large. Accordingly, a phenomenon that the width of the flange portions decreases occurs in the process of thinning the web portion 82. More specifically, as illustrated in FIG. 7(b), concurrently with the flange portion 80 being pressed against the outside of the flat shaping caliber 90, the tip portion of the flange portion 80 separates from the roll due to pulldown, and the flange tip portion bulges inward (a so-called overhang), possibly resulting in that a location illustrated with a broken line part in the drawing becomes a cause of a flaw. Furthermore, when the reduction amount of the thickness of the web portion 82 increases, the metal flow to the flange portion 80 increases, possibly causing shape defects such as folding of the flange portion 80.

Besides, if the shape defect as illustrated in FIG. 7(b) occurs at the flange portion 80, a shape deterioration of a base portion occurs in addition to the overhang at the flange portion 80. This may also bring about a problem of the roll shape not coinciding with the shape of the material to be rolled A in the universal rolling (intermediate rolling step) in the intermediate universal rolling mill 5 being the step at a subsequent stage. In other words, if the shape defect due to the overhang occurs at the tip portion of the flange portion 80 as illustrated in FIG. 7(b), the pass schedule design is subjected to restraints, in order to prevent crush of the tip portion, thus increasing the occurrence rate of flaws.

As explained above referring to FIG. 7, in consideration of the problem in the shaping method using the known flat shaping caliber under the conventional rolling conditions, the present inventors have solved the above problem such as shape defects and so on by setting the rolling conditions in the flat shaping caliber to the condition suitable for the material to be rolled A shaped in the first caliber K1 to the fourth caliber K4 when performing the rough rolling step using the known flat shaping caliber, and found that efficient rolling and shaping can be performed. Hereinafter, this finding will be explained.

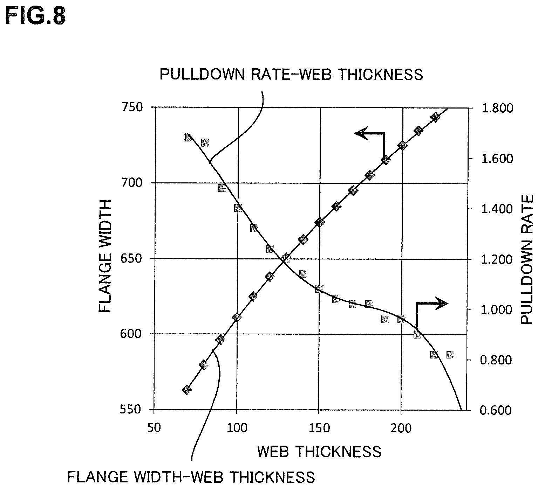

FIG. 8 is a graph regarding the condition that the tip portion of the flange portion 80 separates from the roll (the upper caliber roll 85 or the lower caliber roll 86) when the material to be rolled A shaped in the first caliber K1 to the fourth caliber K4 is subjected to rolling and shaping in a plurality of passes in the fifth caliber K5 (namely, the flat shaping caliber 90). More specifically, FIG. 8 is a graph illustrating the relation between the flange width and the web thickness of the material to be rolled A and the relation between the web thickness and the pulldown rate when the rolling proceeds in the fifth caliber K5. Note that the graph illustrated in FIG. 8 is a graph based on simulation in the case of producing H-shaped steel having dimensions of 1500 mm × 600 mm from a slab material of 2300 mm wide × 300 mm thick.

Here, the pulldown rate represents the flange width decrease amount/the web thickness decrease amount, and the case where the pulldown rate exceeds 1.0 means that the decrease amount of the flange width is large with respect to the web thickness decrease amount and the tip portion of the flange portion 80 separates from the roll.

As for the relation between the pulldown and the caliber roll shape, the pulldown increases as the percentage of the web portion 82 to the total cross-section of the material to be rolled A increases, and the pulldown decreases as the metal flow from the web portion 82 to the flange portion 80 is more induced.

As illustrated in FIG. 8, there is a relation where as the web thickness decreases due to progress of rolling, the flange width also decreases. On the other hand, it is found that the pulldown rate is about 0.8 (namely, less than 1.0) at a stage of a large web thickness, and the pulldown rate increases as the web thickness decreases and becomes 1.0 at the stage where the web thickness becomes about 160 mm to 180 mm, and when the web thickness further decreases, the pulldown rate tends to also greatly increase along therewith. This is because as the web thickness decreases, the reduction rate increases under a condition that the reduction amount is fixed, and the drawing action in a longitudinal direction of the material to be rolled A increases, resulting in increased effect of rolling of drawing the flange portion 80 in the longitudinal direction.

The condition that the tip portion of the flange portion 80 separates from the roll in the flat shaping caliber (fifth caliber K5) according to this embodiment is the condition that the decrease amount of the flange width increases with respect to the decrease amount of the web thickness, and at the stage that the pulldown rate illustrated in FIG. 8 exceeds 1.0, the tip portion of the flange portion 80 separates from the roll. More specifically, in the rolling and shaping in the flat shaping caliber under the condition that the pulldown rate is 1.0 or less, the tip portion of the flange portion 80 is kept in contact with the roll, thus making it possible to perform rolling and shaping without causing the problem such as shape defects of the flange portion 80 explained above referring to FIG. 7.

From the result illustrated in FIG. 8, concretely, such a technique is created that the condition in the case of rolling and shaping the H-shaped steel having dimensions of 1500 mm × 600 mm from a slab material of 2300 mm wide × 300 mm thick by the production method according to this embodiment is kept at the condition that the thickness of the web portion 82 becomes 160 mm or more, in consideration of the condition that the pulldown rate is 1.0 or less in the rolling and shaping in the flat shaping caliber (fifth caliber K5). This is because if the rolling and shaping is performed to an extent that the thickness of the web portion 82 becomes less than 160 mm in the rolling and shaping in the flat shaping caliber (fifth caliber K5), the pulldown rate exceeds 1.0 as illustrated in FIG. 8, so that the tip portion of the flange portion 80 separates from the roll, leading to the shape defect of the flange portion 80.

According to the method of producing H-shaped steel according to this embodiment explained above, the first caliber K1 to the fourth caliber K4 are used to create splits at the upper and lower end portions (slab end surfaces) of the material to be rolled A and perform processing of bending to right and left the portions separated to right and left by the splits to perform the shaping of forming the flange portions 80, thereby enabling shaping of the H-shaped raw blank 13 without performing vertical reduction on the upper and lower end surfaces of the material to be rolled A (slab). In short, it becomes possible to shape the H-shaped raw blank 13 with the flange width made wider as compared with the rough rolling method of reducing at all times the slab end surfaces conventionally performed, resulting in production of a final product (H-shaped steel) having a large flange width such as a web height of more than 600 mm and a flange width of more than 400 mm.

In addition, setting the rolling condition in the flat shaping caliber (fifth caliber K5), in particular, in the rough rolling step to a suitable condition that the pulldown rate becomes 1.0 or less, making it possible to perform rolling and shaping without causing shape defects at the flange portion 80. This makes it possible to efficiently and stably produce an H-shaped steel product with a flange width larger than a conventional flange width.

One example of the embodiment of the present invention has been explained above, but the present invention is not limited to the illustrated embodiment. It should be understood that various changes and modifications are readily apparent to those skilled in the art within the scope of the spirit as set forth in claims, and those should also be covered by the technical scope of the present invention.

For example, the rolling and shaping in the case of producing the H-shaped steel having dimensions of 1500 mm × 600 mm from the slab material of 2300 mm wide × 300 mm thick has been explained as an example in the above embodiment and, in this case, the rolling condition in the flat shaping caliber (fifth caliber K5) has been explained to be kept at the condition that the thickness of the web portion 82 becomes 160 mm or more, but the technique of the present invention is not limited to this. As a matter of course, the rolling condition only needs to be appropriately changed according to the dimensions of a slab material, the dimensions of a desired H-shaped steel product and the like.

Further, the technique of shaping the material to be rolled A using four calibers such as the first caliber K1 to the fourth caliber K4 has been explained in the above embodiment, but the number of calibers for performing the rough rolling step is not limited to this. In other words, the number of calibers engraved on the sizing mill 3 and the rough rolling mill 4 can be arbitrarily changed and appropriately changed to an extent at which the rough rolling step can be suitably performed.

Further, explanation has been made by exemplifying a slab as a material (material to be rolled A) when producing H-shaped steel, but the present invention is naturally applicable also to other materials in a similar shape. In other words, the present invention is also applicable to a case of shaping, for example, a beam blank material to produce H-shaped steel.

### [Industrial Applicability]

The present invention is applicable to a method for producing H-shaped steel using a slab or the like having, for example, a rectangular cross section as a material.

### [Explanation of Codes]

1 rolling facility
2 heating furnace
3 sizing mill
4 rough rolling mill
5 intermediate universal rolling mill
8 finishing universal rolling mill
9 edger rolling mill
11 slab
13 H-shaped raw blank
14 intermediate material
16 H-shaped steel product
20 upper caliber roll (first caliber)
21 lower caliber roll (first caliber)
25, 26 projection (first caliber)
28, 29 split (first caliber)
30 upper caliber roll (second caliber)
31 lower caliber roll (second caliber)
35, 36 projection (second caliber)
38, 39 split (second caliber)
40 upper caliber roll (third caliber)
41 lower caliber roll (third caliber)
45, 46 projection (third caliber)
48, 49 split (third caliber)
50 upper caliber roll (fourth caliber)
51 lower caliber roll (fourth caliber)
55, 56 projection (fourth caliber)
58, 59 split (fourth caliber)
80 flange portion
82 web portion
90 flat shaping caliber
K1 first caliber
K2 second caliber
K3 third caliber
K4 fourth caliber
K5 fifth caliber (flat shaping caliber)
T production line
A material to be rolled

## Claims

1. A method for producing H-shaped steel, the method comprising:
a rough rolling step;
an intermediate rolling step; and
a finish rolling step, wherein:
a rolling mill that performs the rough rolling step is engraved with a plurality of calibers configured to shape a material to be rolled, the number of the plurality of calibers being five or more;
shaping in one or a plurality of passes is performed on the material to be rolled in the plurality of calibers;
a first caliber and a second caliber of the plurality of calibers are formed with projections configured to create splits vertically with respect to a width direction of the material to be rolled;
in the second caliber and subsequent calibers of the plurality of calibers, reduction is performed in a state where end surfaces of the material to be rolled are in contact with peripheral surfaces of the calibers in shaping in at least one pass or more;
in a third caliber and subsequent calibers excluding a final caliber of the plurality of calibers, a step of sequentially bending divided parts formed by the splits is performed; and
the final caliber of the plurality of calibers is a flat shaping caliber, and rolling and shaping in the flat shaping caliber is performed under a rolling condition that a pulldown rate is 1.0 or less.

2. The method of producing the H-shaped steel according to claim 1, wherein
in production of H-shaped steel having dimensions of 1500 mm × 600 mm, the rolling and shaping in the flat shaping caliber is performed under a rolling condition that a web thickness of the material to be rolled after rolling and shaping becomes 160 mm or more.

3. An H-shaped steel product produced by the method of producing the H-shaped steel according to claim 1 or 2, wherein
a flange width is more than 400 mm.
